# EUROPEAN PATENT SPECIFICATION

(11) **EP 1 273 220 B1**
(45) Date of publication and mention of the grant of the patent: **27.07.2005**
(21) Application number: 02077772.8
(22) Date of filing: 02.07.2002
(51) Int. Cl.: A01D 31/00

(54) **Apparatus for lifting bulbous plants, and reel for use therein.**
Vorrichtung zur Rodung von Knollengewächsen, und Spule dafür
Appareil pour arracher des plantes bulbeuses, et bobine pour ceci

(30) Priority: 04.07.2001 NL 1018451
(43) Date of publication of application: 08.01.2003
(73) Proprietor: Pronk, Marcel, 1648 JW de Goorn (NL)
(72) Inventor: Pronk, Marcel, 1648 JW de Goorn (NL)
(74) Representative: Metman, Karel Johannes

(56) References cited:
- NL-A- 9 100 478
- NL-A- 9 400 516
- NL-C- 1 000 417
- NL-C- 1 000 674
- NL-C- 1 010 263

## Description

The invention relates to an apparatus for lifting bulbous plants in accordance with the preamble of claim 1.

Such an apparatus is known from NL-A-9400516. In this prior art document, the first reversing element is a big wheel rolling over the nets in the ground and the second reversing element is a smaller roller positioned behind the wheel. The nets are guided along less than half of the circumference of the wheel and are then guide around the roller in rearward direction.

Another apparatus of this kind is known from NL-A-9 100 478, which discloses the preamble of claim 1.

The object of the present invention is to provide an improved apparatus.

In order to accomplish that objective, the apparatus comprises the aspects defined in claim 1.

The invention offers the advantage that the soil that comes loose after said turning upside-down of the nets can be caught by the soil collecting and discharging means, and, according to claim 2, be distributed over the two sides of the apparatus. As a result, the field will be more level after the passage of the apparatus, so that fewer tilling operations are required before the field can be used again, especially if also the aspect of claim 3 is implemented.

Another advantageous embodiment is the embodiment that is defined in claim 4. The effect of this aspect is that soil which is picked up together with the nets can be discharged again through the intermediate space between the conveyor belts directly after the nets have been taken out of the ground. The smaller the amount of soil that is carried into the apparatus, the smaller the risk of said soil interfering with the operation of the apparatus. The presence of soil in and on the nets causes the force that is required for driving the conveying elements to increase, for example.

The advantage of the embodiment according to claim 6 is that the tube onto which the nets are wound are loaded from the inside rather than being pressure-loaded, as is the case with the known apparatuses, in which the driving elements and the pressure elements engage the ends of the tube. The core according to the invention supports the tube, thus preventing it from sagging, whilst the tube is loaded in an advantageous manner in that the driving forces are exerted from the inside of the tube.

The embodiments of claims 7 and 8 provide a very simple but reliable manner of driving the net tube.

The invention also comprises a reel as part of the apparatus as described above. the pressure elements engage the ends of the tube. The core according to the invention supports the tube, thus preventing it from sagging, whilst the tube is loaded in an advantageous manner in that the driving forces are exerted from the inside of the tube.

The embodiments of claims 7 and 8 provide a very simple but reliable manner of driving the net tube.

The invention also comprises a reel, preferably for use in the apparatus as described above.

The invention will be explained in more detail hereinafter with reference to the drawing, which shows an embodiment of the apparatus according to the invention.

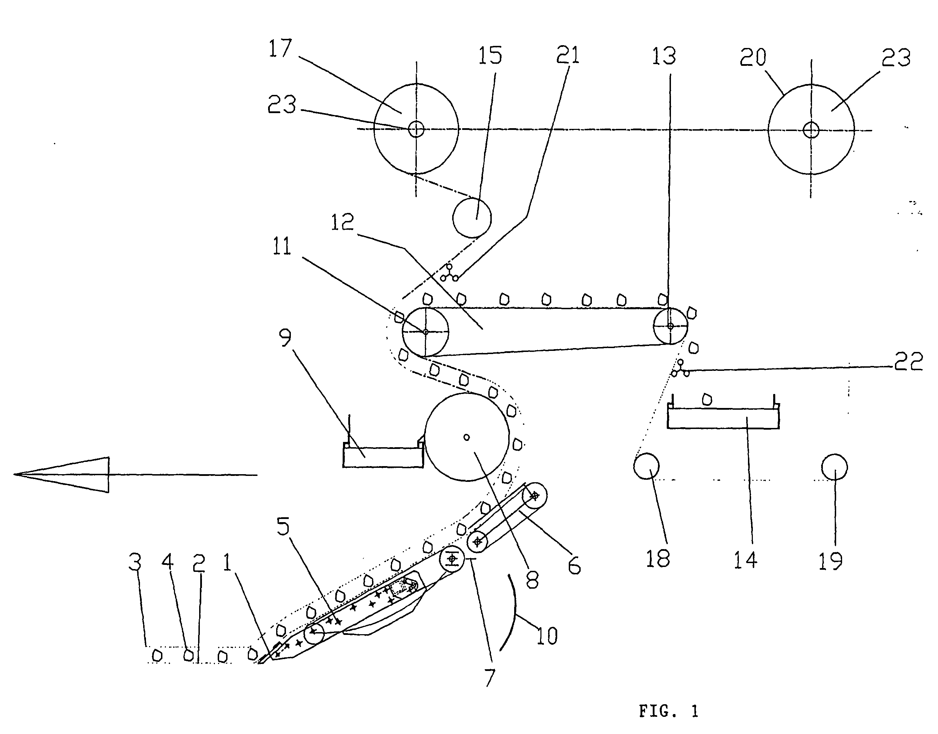

Fig. 1 is a very schematic side elevation of the embodiment of the apparatus according to the invention.

Fig. 2 is a larger-scale side elevation of a reel of the apparatus that is shown in Fig. 1.

Fig. 3 is an even larger-scale schematic longitudinal sectional view of the left-hand part of the reel of Fig. 2.

The drawing shows an embodiment of an apparatus for lifting flower bulbs, but it should be considered that also other tuberous or bulbous plants or the like can be lifted with the apparatus.

The apparatus comprises a frame (not shown) with an undercarriage in the form of wheels, caterpillar tracks or other aids for moving the apparatus forward. The apparatus may be fitted with an independent driving unit, or be drawn or driven. The parts to be mentioned hereinafter are connected to the frame.

In the drawing, the apparatus is shown to comprise lifting means in the form of a lifting scoop 1, by means of which an upper layer of soil can be cut loose and be picked up. Present in said layer of soil are a lower net 2, an upper net 3 and bulbs 4 present therebetween. A first conveyor belt 5 and a second conveyor belt 6 are disposed adjacently to the lifting scoop 1, which conveyor belts transport the nets 2, 3 and the bulbs 4 present therebetween upwards and rearwards. Said conveyor belts 5, 6 define a small intermediate space 7 between them, through which loose soil from the nets 2, 3 can fall, so that soil, in particular the subsoil present under the nets, can be discharged from the apparatus at an early stage already.

A first reversing roller 8 is disposed some distance above the second conveyor belt 6 in this case, over which roller the nets 2, 3 and the bulbs 4 are diverted 180° (or more, or less, as in the illustrated case), as a result of which the nets are positioned upside-down and the soil lying on the nets can fall down and be discharged, in this case by soil collecting and discharging means 9. In this embodiment, said means consist of two transversely disposed conveyor belts extending in opposite directions from the centre of the apparatus, which are capable of discharging the collected soil to either side of the apparatus. Levelling means in the form of blades 10 are arranged on either side of the apparatus, rearwards and downwards of the soil collecting and discharging means 9. Said levelling means spread the soil that is being discharged in inward direction, as a result of which a more level field will remain.

Soil that is not carried over the reversing roller 8 along with the nets 2, 3 can be discharged also at the rear side of the second conveyor belt 6.

A second reversing roller 11 is arranged in the path of transport of the nets 2, 3 and the bulbs 4, behind the reversing roller 8, which second reversing roller 11 is disposed forwards and upwards of the first reversing roller 8, i.e. the central axis of the second reversing roller 11 is located forwards and upwards of the central axis of the first reversing roller. A conveyor belt 12 is passed over said reversing roller 11. At the rear side, said conveyor belt is passed over a roller 13, which is positioned above a bulb-discharging device 14 (a bin or an upwardly or laterally extending conveyor belt or the like). Said second reversing roller 11 causes the nets 2, 3 and the bulbs 4 to return to their original orientation, so that the bulbs are discharged with their roots extending downwards, thus reducing the risk of the noses of the bulbs 4 being damaged.

A net discharging roller 15 is disposed above the conveyor belt 12, over which roller the upper net 3 is led away from the bulbs 4 and subsequently wound onto a reel 17 either directly or via a further roller. The lower net is led to a reel 20 via rollers 18, 19. Said reel 20 may be present at the upper side of the apparatus, as shown, but if the bulb discharging device 14 extends further to the rear, it is more advantageous to dispose the reel 20 at a level lower than that of the bulb discharging device 14.

Bulb detaching means 21 and 22 are furthermore arranged in the discharge path of the nets 2 and 3, respectively, which means detach any bulbs that still adhere to the nets 2, 3, so that said bulbs will land in the bulb discharging device 14 yet.

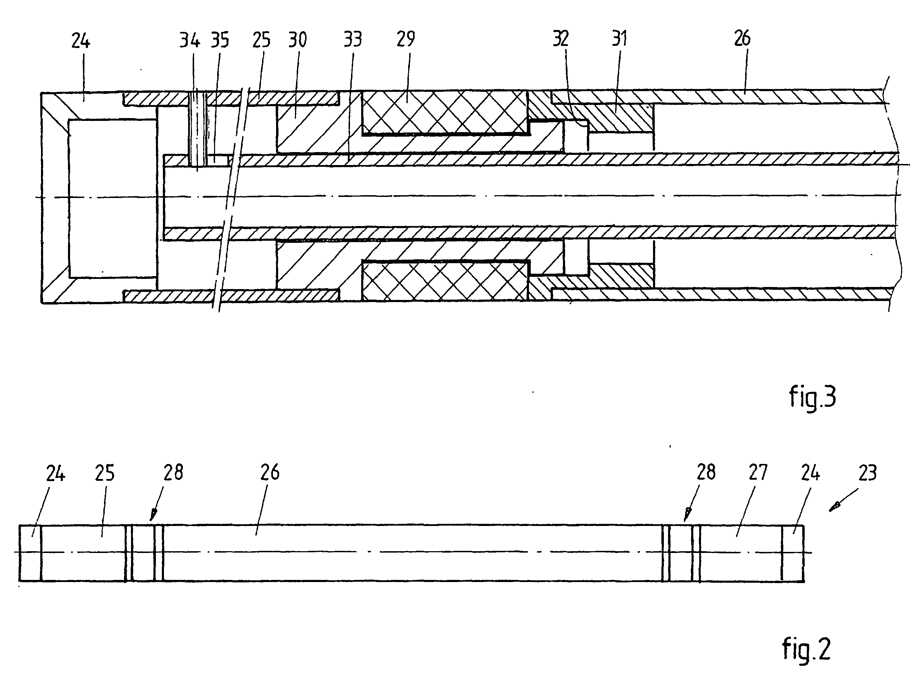

Fig. 2 is a larger-scale side elevation, and Fig. 3 and even larger-scale sectional view of one of the reels 17,20. The reel comprises a multiple part reel shaft or core 23, which fits in a tube of plastic material (not shown), to which core the net in question is fixedly or detachably connected. The ends of the core 23 form points of engagement 24 for a driving element on the one hand and a hold-down element on the other hand. Said points of engagement 24 are standardised and enable a rotationally fixed engagement. This makes it possible to build the reel shaft into existing apparatus without any problems.

The core 23 furthermore comprises three mutually movable steel tube members 25, 26 and 27, of which the middle member 26 is longer than the other members 25 and 27. Present between said tube members are clamping elements 28, which are provided with a rubber ring 29 retained between aluminium pressure rings 30 and 31, as is shown in Fig. 3. The action of the clamping elements 28 is based on the isovolumetric property of the rubber rings 29: as a result of an axial force on the core 23 exerted by means of the pressure element, the rubber rings 29 are compressed by the steel tube members 25, 26, 27 that move towards each other, causing them to expand outwardly. The net tube is present there, and thus the tube is clamped down on the core 23 in a rotationally fixed manner, thus enabling a reliable driving engagement of the tube by the core 23 without any risk of the tube being damaged.

In Fig. 3, the ring 29 is shown to be present on the pressure ring 30, so that it can only expand outwardly when a load is being exerted thereon in axial direction. The pressure rings 30 and 31 can only move a predetermined distance with respect to each other (for example 15 mm in the case of a ring width of 30 mm), because a stop 32 is provided. This arrangement has been made with a view to preventing excessive deformation of the rubber ring 29.

Furthermore, a tube 33 is fitted in a slotted hole 35 in the core 23 via a bolt 34, which slotted hole limits the maximum outward movement of the tube members 25 and 27 so as to ensure the integrity of the core 23 in this manner.

From the foregoing it will be apparent that the invention provides a reliable and properly functioning apparatus for lifting plants. The invention is not restricted to the embodiment as described above and illustrated in the drawing, which can be varied in several ways without departing from the scope of the claims. Thus the number of clamping elements in the core of the reel may be greater than or smaller than two. Also other types of expandable clamping elements are conceivable, for example pneumatic or mechanical clamping elements.

## Claims

1. An apparatus for lifting bulbous plants (4) which have been grown between a lower net (2) and an upper net (3), comprising a frame having a front side and a rear side, lifting means (1) connected to the frame for removing the nets (2, 3) and the bulbous plants (4) present therebetween from the ground, conveying means (5, 6, 8, 11-13) supported by the frame for lifting the nets (2, 3) and the plants (4) onto the machine and transporting them therethrough, means (15, 17, 18, 19, 20) for separating the nets and the plants (4), and means (14) for discharging the plants (4), in which the conveying means (5, 6, 8, 11-13) comprise first conveying elements (5, 6) for carrying the nets and the bulbous plants (4) present therebetween upwards and in the direction of the rear side of the frame, a first reversing element (8) in the form of a roller or the like for turning the nets and the bulbous plants present therebetween upside-down and conveying the nets (2, 3) and the bulbous plants (4) present therebetween to the front side of the frame, and a second reversing element (11) in the form of a roller or the like joining said first reversing element (8) for transporting the nets (2, 3) and the bulbous plants (4) present therebetween to the rear side of the frame again, whilst the plant discharging means (14) are arranged at the rear side of the apparatus, the central axis of the second reversing element (11) being located forwards and upwards of the central axis of the first reversing element (8), **characterized in that** soil collecting and discharging means (9) are arranged between said first (8) and said second (9) reversing elements, under the path of movement of the nets (2, 3), which means are capable of discharging the collected soil from the nets (2, 3) sideways.

2. An apparatus according to claim 1, wherein the soil collecting and discharging means (9) are capable of discharging the collected soil from the nets (2, 3) simultaneously in both directions.

3. An apparatus according to claim 2, wherein blades (10) are disposed on either side of the frame, rearwards and downwards of the soil discharging means (7, 9), for levelling the soil the being discharged and spreading it inwardly.

4. An apparatus, preferably according to any one of the preceding claims, wherein the first conveying elements (5, 6) comprise two separate endless conveyor belts, which join each other with a small intermediate space between them.

5. An apparatus according to any one of the preceding claims, wherein the means (15, 17, 18 - 20) for separating the nets (2, 3) and the bulbous plants (4) comprise two reels (17, 20) for winding up the upper net (2) and the lower net (3), as well as associated driving elements engaging the reels.

6. An apparatus according to claim 5 and any other of the preceding claims, wherein each reel (17, 20) comprises a tube connected to the nets (2, 3), as well as a core (23) arranged within the tube, which tube includes a point of engagement (24) for the driving element at one end and a point of engagement (24) for a pressure element at the other end, and which core (23) is fitted with at least one expandable clamping element (28), which is capable of engaging the inner side of the tube upon actuation thereof.

7. An apparatus according to claim 6, wherein the clamping element (28) can be actuated by an axial pressure force from the pressure element.

8. An apparatus according to claim 7, wherein the clamping element (28) comprises a portion of an isovolumetric material, such as a rubber ring (29), which is confined between mutually movable parts (30, 31) of the core (23), being capable of expansion in outward direction, and which is preferably retained in inward direction.

## Patentansprüche

1. Vorrichtung zum Heben von knolligen Pflanzen (4), die zwischen einem unteren Netz (2) und einem oberen Netz (3) angepflanzt wurden, umfassend einen Rahmen mit einer Stimseite und einer Hinterseite, mit dem Rahmen verbundene Hebemittel (1) zum Abnehmen der Netze (2, 3) und der dazwischen befindlichen knolligen Pflanzen (4) vom Boden, Fördermittel (5, 6, 8, 11 - 13), gestützt vom Rahmen zum Anheben der Netze (2, 3) und der Pflanzen (4) auf die Maschine und Transport durch sie hindurch, Mittel (15, 17, 18, 19, 20) zur Trennung der Netze (2, 3) und Pflanzen (4), sowie Mittel (14) zum Austrag der Pflanzen (4), wobei die Fördermittel (5, 6, 8, 11 -13) umfassen erste Fördermittel (5, 6) zum Aufwärtsleiten der Netze (2, 3) und der sich dazwischen befindenden knolligen Pflanzen (4) in Richtung zur Hinterseite des Rahmens, ein erstes Umlenkelement (8) in Form einer Rolle oder dergleichen zum Umlenken der Netze und der dazwischen liegenden knolligen Pflanzen (4) sowie zum Transport der Netze (2, 3) und der knolligen Pflanzen (4) zur Stirnseite des Rahmens, sowie ein zweites Umlenkelement (11) in Form einer Rolle oder dergleichen, sich anschließend an das besagte erste Umlenkelement (8) zum Transport der Netze (2, 3) und der dazwischen befindlichen knolligen Pflanzen (4) noch einmal zur Hinterseite des Rahmens, während die Pflanzen-Austragsmittel (14) an der Hinterseite der Vorrichtung angeordnet sind, und die Mittelachse des zweiten Umlenkelements (11) nach vom und oberhalb der Mittelachse des ersten Umlenkelements (8) lokalisiert ist, **dadurch gekennzeichnet, dass** die Erde sammelnden und austragenden Einrichtungen (9) zwischen besagtem ersten (8) und zweitem Umlenkelement (11) unterhalb des Bewegungswegs der Netze (2, 3) angeordnet sind, wobei die Einrichtungen zum seitlichen Austrag der gesammelten Erde von den Netzen (2, 3) geeignet sind.

2. Vorrichtung nach Anspruch 1, worin die die Erde sammelnden und austragenden Einrichtungen (9) zum Austrag der gesammelten Erde von den Netzen (2, 3) gleichzeitig in beide Richtungen geeignet sind.

3. Vorrichtung nach Anspruch 2, worin Schaufeln (10) auf beiden Seiten des Rahmens, nämlich nach hinten und unterhalb der die Erde austragenden Einrichtungen (7, 9) angeordnet sind, zur Einebnung der ausgetragenen Erde und ihrer Verteilung nach innen.

4. Vorrichtung vorzugsweise nach jedem der vorherigen Ansprüche, worin die ersten Fördermittel (5, 6) zwei separate Endlos-Förderbänder aufweisen, die hintereinander mit einem kleinen Zwischenraum angeordnet sind.

5. Vorrichtung nach jedem der vorhergehenden Ansprüche, worin die Mittel (15, 17, 18 - 20) zur Trennung der Netze (2, 3) und der Pflanzenknollen (4) zwei Haspel (17, 20) zum Aufwickeln des oberen Netzes (2) und des unteren Netzes (3) aufweisen, ebenso wie zugeordnete Antriebselemente im Eingriff mit den Haspeln.

6. Vorrichtung nach Anspruch 5 und jedem der übrigen vorhergehenden Ansprüche, worin jeder Haspel (17, 20) ein Rohr verbunden mit den Netzen (2, 3) aufweist, ebenso eine in dem Rohr angeordnete Welle (23), wobei das Rohr an einem Ende einen Angriffspunkt (24) für das Antriebselement einschließt und einen Angriffspunkt (24) am anderen Ende für ein Druckelement, und wobei die Welle (23) mit zumindest einem dehnbaren Befestigungselement (28) ausgerüstet ist, das bei Betätigung mit der Innenseite des Rohres eingriffsfähig ist.

7. Vorrichtung nach Anspruch 6, worin das Befestigungselement (28) durch eine axiale Druckkraft des Druckelements betätigbar ist.

8. Vorrichtung nach Anspruch 7, worin das Befestigungselement (28) teilweise aus einem isovolumetrischen Material besteht, beispielsweise aus einem Gummiring (29), der zwischen gegenseitig beweglichen Teilen (30, 31) der Welle (23) begrenzt wird, mit der Fähigkeit der Ausdehnung nach außen, und der vorzugsweise nach innen gerichtet festgehalten wird.

## Revendications

1. Appareil permettant de soulever des plantes bulbeuses (4) qui ont été cultivées entre un filet inférieur (2) et un filet supérieur (3), comprenant un châssis ayant un côté avant et un côté arrière, des moyens de levage (1) raccordés au châssis pour retirer les filets (2, 3) et les plantes bulbeuses (4) présentes entre eux, du sol, des moyens de transport (5, 6, 8, 11-13) supportés par le châssis pour lever les filets (2, 3) et les plantes (4) sur la machine et les transporter, des moyens (15, 17, 18, 19, 20) pour séparer les filets et les plantes (4), et des moyens (14) pour décharger les plantes (4), dans lequel les moyens de transport (5, 6, 8, 11-13) comprennent des premiers éléments de transport (5, 6) pour transporter les filets et les plantes bulbeuses (4) présentes entre eux, vers le haut et dans la direction du côté arrière du châssis, un premier élément de renversement (8) se présentant sous la forme d'un rouleau ou similaire pour retourner les filets et les plantes bulbeuses présentes entre eux et transporter les filets (2, 3) et les plantes bulbeuses (4) présentes entre eux, vers le côté avant du châssis, et un second élément de renversement (11) se présentant sous la forme d'un rouleau ou similaire assemblant ledit premier élément de renversement (8) pour transporter les filets (2, 3) et les plantes bulbeuses (4) présentes entre eux, à nouveau vers le côté arrière du châssis, alors que les moyens de décharge (14) de plantes sont agencés au niveau du côté arrière de l'appareil, et l'axe central du second élément de renversement (11) est situé à l'avant et vers le haut de l'axe central du premier élément de renversement (8), **caractérisé en ce que** les moyens de décharge et de collecte de terre (9) sont agencés entre ledit premier (8) et ledit second (9) élément de renversement, sous la trajectoire du mouvement des filets (2, 3), ces moyens étant capables de décharger la terre collectée des filets (2, 3) latéralement.

2. Appareil selon la revendication 1, dans lequel les moyens de décharge et de collecte de terre (9) sont capables de décharger la terre collectée des filets (2, 3) simultanément dans les deux directions.

3. Appareil selon la revendication 2, dans lequel des lames (10) sont disposées de chaque côté du châssis, vers l'arrière et vers le bas desdits moyens de décharge de terre (7, 9) pour niveler la terre qui est déchargée et la répandre vers l'intérieur.

4. Appareil, de préférence selon l'une quelconque des revendications précédentes, dans lequel les premiers éléments de transport (5, 6) comprennent deux courroies transporteuses sans fin séparées, qui s'assemblent entre elles avec un petit espace intermédiaire entre elles.

5. Appareil selon l'une quelconque des revendications précédentes, dans lequel les moyens (15, 17, 18 - 20) pour séparer les filets (2, 3) et les plantes bulbeuses (4) comprennent deux enrouleurs (17, 20) pour enrouler le filet supérieur (2) et le filet inférieur (3), ainsi que des éléments d'entraînement associés qui mettent en prise les dérouleurs.

6. Appareil selon revendication 5 et l'une quelconque des autres revendications précédentes, dans lequel chaque enrouleur (17, 20) comprend un tube raccordé aux filets (2, 3), ainsi qu'une âme (23) agencée à l'intérieur du tube, lequel tube comprend un point de mise en prise (24) pour l'élément d'entraînement au niveau d'une extrémité et un point de mise en prise (24) pour un élément de pression au niveau de l'autre extrémité, et laquelle âme (23) est montée avec au moins un élément de serrage extensible (28) qui est capable de mettre en prise le côté interne du tube suite à son actionnement.

7. Appareil selon la revendication 6, dans lequel l'élément de serrage (28) peut être actionné par une force de pression axiale provenant de l'élément de pression.

8. Appareil selon la revendication 7, dans lequel l'élément de serrage (28) comprend une partie d'un matériau isovolumétrique, telle qu'une bague en caoutchouc (29), qui est enfermée entre des parties (30, 31) mutuellement mobiles de l'âme (23), pouvant s'étendre dans la direction vers l'extérieur et qui est de préférence retenue dans la direction vers l'intérieur.
